# DEMANDE DE BREVET EUROPEEN

(11) **EP 1 323 486 A1**
(43) Date de publication de la demande: **02.07.2003**
(21) Numéro de dépôt: 01870284.5
(22) Date de dépôt: 20.12.2001
(51) Int. Cl.: B23B 51/10

(54) **Outil de lamage**

(71) Demandeur: Techspace Aero S.A., 4041 Herstal (BE)
(72) Inventeur: Driesen, Auguste, 3700 Tongeren (BE)
(74) Mandataire: Van Malderen, Joelle

(57) **Abrégé**

La présente invention se rapporte à un outil de lamage en tirant, monobloc et non articulé, pour creuser dans une pièce (10) munie d'un trou (6) une gorge (4) au niveau dudit trou (6), ledit outil comprenant (i) un manche (1) présentant un axe de rotation (A), (ii) une tige support (2) usinée sur ledit manche (1) et présentant un axe de symétrie (B), et (iii) une partie coupante (3) montée sur ladite tige support (2) et présentant également un axe de symétrie (C), l'axe de symétrie (C) de la partie coupante (3) étant décalé par rapport à l'axe de symétrie (B) de la tige support (2), ledit outil étant caractérisé en ce que l'axe de rotation (A) du manche (1) et l'axe de symétrie (B) de la tige support (2) sont décalés l'un par rapport à l'autre.

## Description

### Objet de l'invention

La présente invention se rapporte à un outil de lamage en tirant, monobloc et non articulé, qui permet de lamer une pièce telle qu'une bague ou une bride en vue d'obtenir une gorge circulaire d'un certain diamètre à l'intérieur de ladite pièce.

### Etat de la technique

Les outils de lamage en tirant peuvent être utilisés pour creuser des gorges à l'intérieur de trous tels que ceux présents au niveau d'une bague ou d'une bride.

Il s'agit pour la plupart d'outils comprenant un manche sur lequel est monté un support, ainsi qu'une partie coupante qui est montée sur ledit support et qui comporte perpendiculairement à l'axe du support une arête de coupe.

On observe que l'axe de symétrie du support de la partie coupante et l'axe de rotation du manche sont identiques.

Ces outils sont essentiellement divisés en deux classes, à savoir les outils articulés et les outils non articulés, selon que le support est articulé ou non sur le manche.

Pratiquement, lorsqu'il s'agit de lamer en tirant une pièce, on fait passer l'outil de lamage à travers le trou de la pièce et on impose à l'outil à la fois une rotation et une translation selon l'axe de son manche. C'est la combinaison de ces deux mouvements de rotation et de translation qui permet de lamer une gorge à l'intérieur du trou au niveau ladite pièce.

Les outils de lamage non articulés présentent l'inconvénient de ne pas permettre un lamage de pièces difficilement accessibles. En outre, pour des raisons de contraintes géométriques, de tels outils ne permettent pas de lamer une bride ou une bague pour obtenir une gorge dont le diamètre est proche du double du diamètre du trou de la bride ou de la bague. En effet, le couple important au niveau de l'arête de coupe génère une forte torsion du support de cette partie coupante qui peut induire une déformation géométrique non acceptable et même le bris de cet outil de coupe.

Quant aux outils de lamage articulés, si le problème d'accès aux pièces à lamer ne se pose pas étant donné leur flexibilité, cette flexibilité constitue en même temps un inconvénient en ce sens qu'elle ne garantit pas une précision et une sécurité optimales du lamage (moins de rigidité de l'outil). Leur réalisation est également plus difficile.

### Buts de l'invention

La présente invention vise à résoudre les problèmes de l'état de la technique et en particulier à proposer un outil de lamage non articulé permettant de lamer une pièce en vue d'obtenir une gorge dont le diamètre est significativement plus grand que le diamètre du trou de ladite pièce.

La présente invention a pour but également de proposer un outil de lamage fiable et précis.

Un autre but de l'invention est de proposer un outil de lamage simple d'emploi et dont le coût de réalisation est modéré.

### Principaux éléments caractéristiques de l'invention

La présente invention se rapporte à un outil de lamage en tirant, monobloc et non articulé, pour creuser dans une pièce munie d'un trou une gorge au niveau dudit trou, ledit outil comprenant (i) un manche présentant un axe de rotation, (ii) une tige support usinée sur ledit manche et présentant un axe de symétrie, et (iii) une partie coupante montée sur ladite tige support et présentant également un axe de symétrie, l'axe de symétrie de la partie coupante étant décalé par rapport à l'axe de symétrie de la tige support, ledit outil étant caractérisé en ce que l'axe de rotation du manche et l'axe de symétrie de la tige support sont décalés l'un par rapport à l'autre.

Selon une forme de réalisation avantageuse, la partie coupante présente perpendiculairement à l'axe de rotation une arête de coupe.

De préférence, la tige support est de forme cylindrique à section circulaire.

De manière particulièrement préférée, la tige support de la partie coupante présente une section délimitée par l'intersection de deux arcs de cercle de même rayon, le rayon commun desdits arcs de cercle étant légèrement inférieur au rayon du trou.

### Brève description des figures

La figure 1 représente une vue en coupe longitudinale d'un outil monoaxe selon l'état de la technique.

La figure 2 représente une vue en coupe longitudinale d'un outil selon une première forme d'exécution de l'invention.

La figure 3 décrit une vue selon une coupe longitudinale de l'outil selon une première forme d'exécution de la présente invention en fonctionnement.

La figure 4 décrit une vue en coupe de la tige support d'un outil de lamage selon une deuxième forme d'exécution de la présente invention.

### Description d'une forme d'exécution selon l'état de la technique

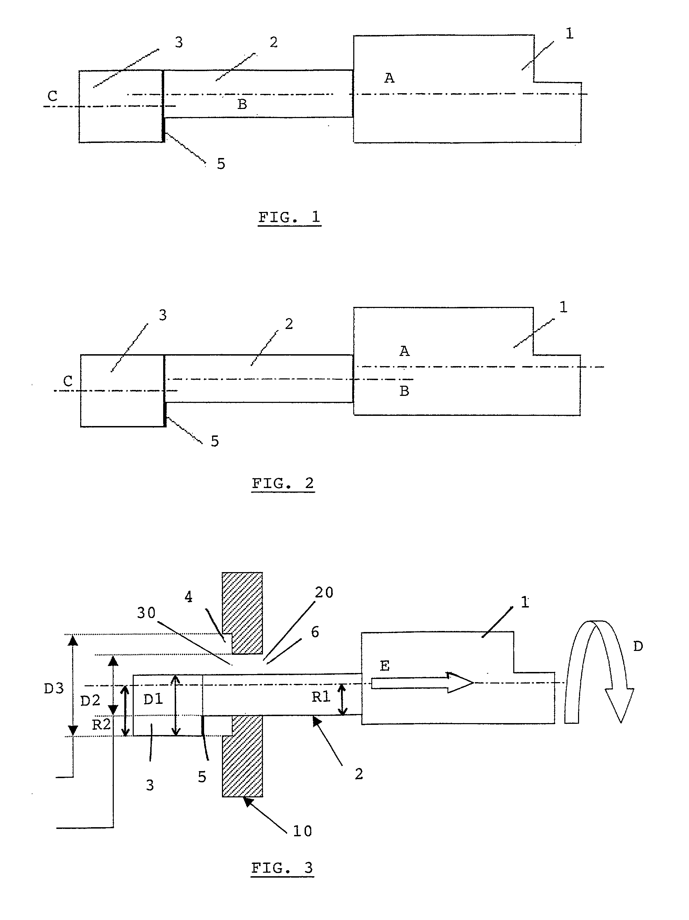

Ainsi que représenté à la Fig. 1, un outil de lamage monobloc et non articulé selon l'état de la technique comprend un manche 1 qui présente un axe de rotation A qui sera entraîné par un moteur.

Une tige support 2 de forme cylindrique est fixée par une de ses extrémités sur ce manche 1. Sur l'extrémité opposée de la tige support 2 est usinée une partie coupante 3. La partie coupante 3 présente de manière perpendiculaire à l'axe de rotation A une arête de coupe 5.

Selon l'état de la technique, la tige support 2 présente un axe de symétrie B et la partie coupante 3 présente un axe de symétrie C, les axes de symétrie B et C étant décalés.

En revanche, l'axe A de rotation du manche 1 et l'axe de symétrie B de la tige support 2 coïncident.

En fonctionnement, l'axe de rotation A du manche 1 de l'outil de lamage imprime le mouvement de l'arête de coupe 5 et permet, lorsqu'il est actionné d'un mouvement "en tirant", de creuser une gorge circulaire à l'intérieur du trou d'une bague ou bride à lamer.

### Description de formes d'exécution préférées de l'invention

Un outil de lamage monobloc et non articulé selon une forme d'exécution préférée de l'invention est représenté à la figure 2.

Comme l'outil de lamage monobloc selon l'état de la technique, l'outil de lamage selon l'invention comprend un manche 1 qui présente un axe de rotation A qui sera entraîné par un moteur.

De même que pour la figure 1, sur ce manche 1 est disposée une tige support 2 par une de ses deux extrémités. Dans cette forme d'exécution, la tige support 2 est une tige cylindrique à section circulaire. Sur cette tige support 2, au niveau de l'autre extrémité, est usinée une partie coupante 3. La partie coupante 3 présente de manière perpendiculaire à l'axe de rotation A une arête de coupe 5.

Selon l'invention, la tige support 2 présente un axe de symétrie B et la partie coupante 3 présente un axe de symétrie C décalés l'un par rapport à l'autre.

Par ailleurs, l'axe de rotation A du manche 1 est décalé par rapport à l'axe de symétrie B de la tige support 2.

Concrètement, lorsque l'on souhaitera procéder au lamage d'une pièce 10 (voir figure 3), on choisira l'outil de lamage qui présente des caractéristiques dimensionnelles adéquates en fonction du résultat que l'on souhaite obtenir, c'est-à-dire en fonction de la géométrie de la gorge 4 que l'on souhaite creuser, et également en fonction de la géométrie de la pièce 10 (bride ou bague) à lamer.

Plus précisément, les points suivants devront notamment être pris en compte dans la conception de l'outil (voir figures 2 et 3):
- le diamètre D1 de la partie coupante 3 définit le diamètre minimal du trou 6 de la pièce à lamer 10 dans lequel sera introduit l'outil de lamage selon la présente invention ;
- la distance R1 définit le rayon minimal du trou de la pièce à lamer 10, et
- la distance R2 définit le rayon de lamage de la gorge 4 qui sera creusée par l'outil, D3 étant le diamètre de lamage.

On observe à la Fig. 3 le schéma de fonctionnement d'un tel outil.

Comme représenté sur cette figure 3, pour procéder au lamage de la pièce à lamer 10, on insère l'outil de lamage dans une des extrémités 20 du trou 6 et on fait ressortir la partie coupante 3 de l'outil par l'autre extrémité 30 du trou 6. On inflige ensuite à l'outil de lamage un mouvement de rotation selon l'axe A du manche 1, ainsi que symbolisé par la flèche D, tout en le faisant avancer par translation selon l'axe A (flèche E d'avance de travail, ce qui revient à tirer l'outil). De cette manière, par la rotation de l'outil, on pourra creuser "en tirant" la gorge 4 au niveau de l'extrémité 30 du trou 6 de ladite pièce à lamer 10.

Cet outil permet de manière particulièrement avantageuse de lamer en tirant des pièces présentant des géométries impossibles à réaliser avec des outils conventionnels, plus particulièrement avec des outils non articulés.

En effet, auparavant, il était nécessaire d'utiliser un outil articulé et donc moins rigide pour effectuer de tels diamètres de lamage où il était nécessaire de retourner la pièce, ce qui devait engendrer une opération supplémentaire ou l'utilisation d'une allonge.

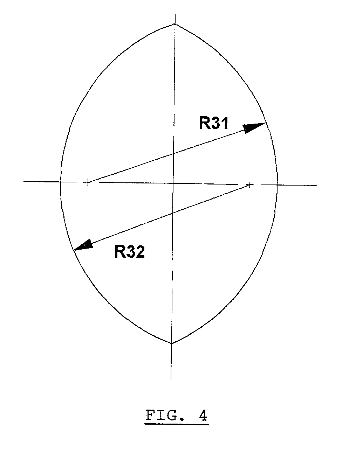

La figure 4 présente une deuxième forme d'exécution de l'outil de lamage selon l'invention.

On observe sur cette figure 4 de manière particulièrement avantageuse que la tige support 2 de la partie coupante 3 n'a plus une forme cylindrique, mais présente une section formée par l'intersection de deux arcs de cercle dont les rayons R31 et R32 sont légèrement inférieurs à la distance R1 correspondant au rayon du trou de la pièce à lamer 10. L'outil de lamage est ainsi nettement plus résistant à la torsion provoquée par l'effort de coupe par rapport à une tige cylindrique, tout en conservant le même encombrement fonctionnel.

## Revendications

1. Outil de lamage en tirant, monobloc et non articulé, pour creuser dans une pièce (10) munie d'un trou (6) une gorge (4) au niveau dudit trou (6), ledit outil comprenant (i) un manche (1) présentant un axe de rotation (A), (ii) une tige support (2) usinée sur ledit manche (1) et présentant un axe de symétrie (B), et (iii) une partie coupante (3) montée sur ladite tige support (2) et présentant également un axe de symétrie (C), l'axe de symétrie (C) de la partie coupante (3) étant décalé par rapport à l'axe de symétrie (B) de la tige support (2), ledit outil étant **caractérisé en ce que** l'axe de rotation (A) du manche (1) et l'axe de symétrie (B) de la tige support (2) sont décalés l'un par rapport à l'autre.

2. Outil de lamage selon la revendication 1, **caractérisé en ce que** la partie coupante (3) présente perpendiculairement à l'axe de rotation (A) une arête de coupe (5).

3. Outil de lamage selon la revendication 1 ou 2, **caractérisé en ce que** la tige support (2) est de forme cylindrique à section circulaire.

4. Outil de lamage selon la revendication 1, **caractérisé en ce que** la tige support (2) de la partie coupante (3) présente une section délimitée par l'intersection de deux arcs de cercle de même rayon (R31,R32), le rayon commun desdits arcs de cercle étant légèrement inférieur au rayon du trou (R1).
